# EUROPÄISCHE PATENTANMELDUNG

(11) **EP 4 585 026 A1**
(43) Veröffentlichungstag der Anmeldung: **16.07.2025**
(21) Anmeldenummer: 24217362.3
(22) Anmeldetag: 04.12.2024
(51) Int. Cl.: A01B 69/04, A01B 71/02

(54) **VERFAHREN ZUR ERZEUGUNG VON ROUTENPLÄNEN**

(30) Priorität: 09.01.2024 DE 102024100406
(71) Anmelder: CLAAS Saulgau GmbH, 88340 Bad Saulgau (DE)
(72) Erfinder: Spieler, Raphael, 88339 Bad Waldsee (DE); Mock, Andreas, 88284 Wolpertswende (DE); Fensterle, Matthias, 88521 Ertingen (DE)
(74) Vertreter: Budach, Steffen

(57) **Zusammenfassung**

Die vorliegende Erfindung betrifft ein Verfahren zur Erzeugung von Routenplänen für zumindest zwei unterschiedliche Bearbeitungsschritte ausführende landwirtschaftliche Arbeitsmaschinen (1, 1', 2), die zeitlich versetzt auf einem Feld (F) den jeweiligen arbeitsmaschinenspezifischen Bearbeitungsschritt ausführen, wobei die Ausführung des nachfolgenden Bearbeitungsschrittes von der Durchführung des vorangehenden Bearbeitungsschrittes abhängig ist, wobei der Routenplan zur Durchführung des vorangehenden Bearbeitungsschrittes in Abhängigkeit von einer Arbeitsbreite (AB1, AB1') der den vorangehenden Bearbeitungsschritt ausführenden Arbeitsmaschine(1, 1') bestimmt wird, wobei die Routenplanung zur Durchführung der den nachfolgenden Bearbeitungsschritt ausführenden Arbeitsmaschine (2) bei von der Arbeitsbreite (AB1, AB1') der den vorangehenden Bearbeitungsschritt ausführenden Arbeitsmaschine(1, 1') abweichender Arbeitsbreite (AB2) in Abhängigkeit von zumindest einem bestimmten Arbeitsergebnisparameter der Durchführung des vorangehenden Bearbeitungsschrittes durchgeführt wird.

## Beschreibung

Die vorliegende Erfindung betrifft ein Verfahren zur Erzeugung von Routenplänen gemäß dem Oberbegriff des Anspruches 1. Weiterhin sind ein Routenplanungssystem zur Erzeugung von Routenplänen gemäß Anspruch 11 sowie eine landwirtschaftliche Arbeitsmaschine gemäß dem Oberbegriff des Anspruches 13 Gegenstand der vorliegenden Erfindung.

Ein aus dem Stand der Technik bekanntes Verfahren zur Erzeugung von Routenplänen für zumindest zwei unterschiedliche Bearbeitungsschritte ausführende landwirtschaftliche Arbeitsmaschinen, die zeitlich versetzt auf einem Feld den jeweiligen arbeitsmaschinenspezifischen Bearbeitungsschritt ausführen, wobei die Ausführung des nachfolgenden Bearbeitungsschrittes von der Durchführung des vorangehenden Bearbeitungsschrittes abhängig ist, sieht vor, dass der Routenplan zur Durchführung des vorangehenden Bearbeitungsschrittes in Abhängigkeit von der Arbeitsbreite der den vorangehenden Bearbeitungsschritt ausführenden Arbeitsmaschine bestimmt wird.

Aus der EP 1 769 662 A1 ist ein Verfahren der vorstehend genannten Art bekannt.

Ausgehend vom vorstehend genannten Stand der Technik liegt der Erfindung die Aufgabe zugrunde, ein Verfahren zur Erzeugung von Routenplänen für zumindest zwei unterschiedliche Bearbeitungsschritte ausführende landwirtschaftliche Arbeitsmaschinen sowie ein Routenplanungssystem und eine landwirtschaftliche Arbeitsmaschine der eingangs genannten Art weiterzubilden, so dass eine verbesserte Routenplanung erreicht wird, die eine effiziente Durchführung der nacheinander auszuführenden unterschiedlichen Bearbeitungsschritte ermöglicht.

Die vorstehende Aufgabe wird aus verfahrenstechnischer Sicht von einem Verfahren gemäß dem Oberbegriff des Anspruches 1 durch dessen kennzeichnenden Merkmale gelöst. Aus vorrichtungstechnischer Sicht wird die Aufgabe durch ein Routenplanungssystem gemäß dem Oberbegriff des Anspruches 11 durch dessen kennzeichnenden Merkmale sowie eine landwirtschaftliche Arbeitsmaschine gemäß Anspruch 13 gelöst.

Vorteilhafte Weiterbildungen und Ausführungsformen sind Gegenstand der hiervon abhängigen Unteransprüche.

Gemäß dem Anspruch 1 wird ein Verfahren zur Erzeugung von Routenplänen für zumindest zwei unterschiedliche Bearbeitungsschritte ausführende landwirtschaftliche Arbeitsmaschinen vorgeschlagen, die zeitlich versetzt auf einem Feld den jeweiligen arbeitsmaschinenspezifischen Bearbeitungsschritte ausführen, wobei die Ausführung des nachfolgenden Bearbeitungsschrittes von der Durchführung des vorangehenden Bearbeitungsschrittes abhängig ist, wobei der Routenplan zur Durchführung des vorangehenden Bearbeitungsschrittes in Abhängigkeit von der Arbeitsbreite der den vorangehenden Bearbeitungsschritt ausführenden Arbeitsmaschine bestimmt wird. Erfindungsgemäß ist vorgesehen, dass die Routenplanung zur Durchführung der den nachfolgenden Bearbeitungsschritt ausführenden Arbeitsmaschine bei von der Arbeitsbreite der den vorangehenden Bearbeitungsschritt ausführenden Arbeitsmaschine abweichender Arbeitsbreite in Abhängigkeit von zumindest einem bestimmten Arbeitsergebnisparameter der Durchführung des vorangehenden Bearbeitungsschrittes durchgeführt wird.

Wesentlich ist dabei die Überlegung, dass die Routenplanung bei der Erstellung einer Fahrspur für die Durchführung der den nachfolgenden Bearbeitungsschritt ausführenden Arbeitsmaschine einen die Effizienz der Durchführung des nachfolgenden Bearbeitungsschrittes beeinflussenden Arbeitsergebnisparameter berücksichtigt. Bei voneinander abweichenden Arbeitsbreiten der den vorangehenden Bearbeitungsschritt und der den nachfolgenden Bearbeitungsschritt ausführenden Arbeitsmaschine kann es zu Situationen kommen, in denen im nachfolgenden Bearbeitungsschritt Abschnitte eines Feldes durch die den nachfolgenden Bearbeitungsschritt ausführende Arbeitsmaschine bearbeitet werden, in denen sich kein Erntegut befindet. Dies kann insbesondere aus einer Parametrierung der den vorangehenden Bearbeitungsschritt ausführenden Arbeitsmaschine resultieren. Es kann somit im vorangehenden Bearbeitungsschritt bereits eine Teilfläche entlang der Fahrspuren der den vorangehenden Bearbeitungsschritt ausführenden Arbeitsmaschine freigeräumt werden, die von der den nachfolgenden Bearbeitungsschritt ausführenden Arbeitsmaschine nicht mehr zu bearbeiten ist.

Insbesondere kann der zumindest eine bestimmte Arbeitsergebnisparameter von der den vorangehenden Bearbeitungsschritt ausführenden Arbeitsmaschine von einer Datenverarbeitungseinrichtung mittelbar oder unmittelbar an eine Datenverarbeitungseinrichtung der den nachfolgenden Bearbeitungsschritt ausführenden Arbeitsmaschine übertragen werden. Hierzu können die Arbeitsmaschinen Datenübertragungseinrichtungen aufweisen, die zur drahtlosen oder drahtgebundenen Datenübertragung ausgeführt und eingerichtet sind. Eine mittelbare Übertragung zwischen den Datenverarbeitungseinrichtungen der Arbeitsmaschinen kann durch ein zwischengeschaltetes Datenverarbeitungssystem, insbesondere ein Farmmanagementsystem, erfolgen. Dabei kann der zumindest eine bestimmte Arbeitsergebnisparameter von der den vorangehenden Bearbeitungsschritt ausführenden Arbeitsmaschine zunächst an das Datenverarbeitungssystem übertragen werden, welches den zumindest einen bestimmten Arbeitsergebnisparameter an die Datenverarbeitungseinrichtung der den nachfolgenden Bearbeitungsschritt ausführenden Arbeitsmaschine überträgt. Die Übertragung durch die Datenverarbeitungseinrichtung kann auf Anforderung durch eine Steuereinheit der den nachfolgenden Bearbeitungsschritt ausführenden Arbeitsmaschine erfolgen. Alternativ kann die insbesondere als Farmmanagementsystem ausgeführte Datenverarbeitungseinrichtung den zumindest einen bestimmten Arbeitsergebnisparameter in Abhängigkeit von einer Einsatzplanung der den nachfolgenden Bearbeitungsschritt ausführenden Arbeitsmaschine übertragen.

Hierbei kann die Übertragung des zumindest einen Arbeitsergebnisparameters automatisch durch Datentransfer an oder manuell durch Eingabe in die Datenübertragungseinrichtung der den nachfolgenden Bearbeitungsschritt ausführenden Arbeitsmaschine durchgeführt werden.

Bevorzugt kann eine im vorangehenden Bearbeitungsschritt generierte Ablagebreite und/oder Ablageposition von Mähgut oder eines Schwads als zumindest ein Arbeitsergebnisparameter bestimmt werden. Die im vorangehenden Bearbeitungsschritt generierte Ablagebreite und/oder Ablageposition bestimmt die Teilfläche entlang der Fahrspuren der den vorangehenden Bearbeitungsschritt ausführenden Arbeitsmaschine, welche von der den nachfolgenden Bearbeitungsschritt ausführenden Arbeitsmaschine keiner erneuten Bearbeitung unterzogen werden sollen.

Insbesondere kann die im vorangehenden Bearbeitungsschritt generierte Ablagebreite kleiner als die Arbeitsbreite der den nachfolgenden Bearbeitungsschritt ausführenden Arbeitsmaschine sein.

Alternativ kann die Arbeitsbreite der den nachfolgenden Arbeitsschritt ausführenden Maschine kleiner als die generierte Ablagebreite aus dem vorhergehenden Bearbeitungsschritt sein. Für diesen Fall können für den nachfolgenden Bearbeitungsschritt mehrere Fahrspuren erstellt werden.

Hierzu können in Abhängigkeit von der Arbeitsbreite der den nachfolgenden Bearbeitungsschritt ausführenden Arbeitsmaschine zwei oder mehr Fahrspuren erzeugt werden, durch welche die im vorangehenden Bearbeitungsschritt generierte Ablagebreite gleichmäßig unterteilt wird.

Beispielsweise kann durch ein an der Arbeitsmaschine angeordnetes Mähwerk bei der Durchführung eines Mähvorgangs als vorangehender Bearbeitungsschritt bei entsprechender technischer Ausgestaltung des Mähwerkes und Parametrierung eine Ablagebreite für das Mähgut generiert werden, die geringer als die Arbeitsbreite des Mähwerkes ist. Beispielhaft sei hierfür eine Mähstrategie genannt, bei welcher während einer Hin- und Herfahrt auf der doppelten Arbeitsbreite des Mähwerks gemäht wird. Die Ablagebreite eines währenddessen durch Bandeinheiten des Mähwerks generierten Schwads ist jedoch geringer ist als die Breite der beim Mähen bearbeiteten Mähstreifen. Eine solche Feldbearbeitungsstrategie kann zur Anwendung kommen, um einen Anwelkprozess von geschnittenem Erntegut zu steuern. Weiterhin kann diese Feldbearbeitungsstrategie zur Anwendung kommen, um den Masseanteil an Erntegut im generierten Schwad zu erhöhen. Eine den Schwad verarbeitende Erntemaschine, insbesondere ein Feldhäcksler, kann auf diese Weise besser ausgelastet werden.

Entsprechendes kann sich auch ergeben, wenn durch einen an der Arbeitsmaschine angeordneten Wender oder Zetter bei der Durchführung eines Wende- oder Zettvorgangs als vorangehender Bearbeitungsschritt durch die Parametrierung eine Ablagebreite generiert wird, die geringer als die Arbeitsbreite des Wenders oder Zetters ist.

Insbesondere kann bei der Erstellung des Routenplans für die den nachfolgenden Bearbeitungsschritt ausführenden Arbeitsmaschine eine Fahrspur erzeugt werden, welche im Wesentlich in der Mitte der im vorangehenden Bearbeitungsschritt generierten Ablagebreite verläuft.

Bevorzugt kann als vorangehender Bearbeitungsschritt ein Mähvorgang und/oder ein Wendevorgang von der den vorangehenden Bearbeitungsschritt ausführenden Arbeitsmaschine durchgeführt werden. Der Mähvorgang sowie der Wendevorgang sind Teilprozesse einer Futterernteprozesskette. Diese Teilprozesse werden aufeinander aufbauend und einander nachfolgend durchgeführt.

Gemäß einer Weiterbildung kann der zumindest eine Arbeitsergebnisparameter von zumindest einer Sensoranordnung an der den vorangehenden Bearbeitungsschritt ausführenden Arbeitsmaschine erfasst und/oder durch Auslesen eines in einer Speichereinrichtung der den vorangehenden Bearbeitungsschritt ausführenden Arbeitsmaschine hinterlegten Sollwertes für den zumindest einen Arbeitsergebnisparameter bestimmt werden. Die zumindest eine Sensoranordnung kann wenigstens einen Positionsortungssensor umfassen, welcher zur Erfassung von Positionskoordinaten der den vorangehenden Bearbeitungsschritt ausführenden Arbeitsmaschine eingerichtet ist, um deren Fahrspur aufzuzeichnen. Zusätzlich oder alternativ kann die zumindest eine Sensoranordnung wenigstens einen optischen Sensor umfassen, welcher zur Erfassung des zumindest einen Arbeitsergebnisparameters ausgeführt und eingerichtet ist. Die Speichereinrichtung kann Bestandteil der Datenverarbeitungsvorrichtung der den vorangehenden Bearbeitungsschritt ausführenden Arbeitsmaschine sein. Die Speichereinrichtung kann auch Teil einer zusätzlichen Steuereinheit der Arbeitsmaschine sein.

Insbesondere kann die den nachfolgenden Bearbeitungsschritt ausführende Arbeitsmaschine durch ein Routenplanungssystem angesteuert werden, welches eine jeweilige Fahrspur in Abhängigkeit des zumindest einen empfangenen Arbeitsergebnisparameters bestimmt.

Gemäß einer Weiterbildung kann die den nachfolgenden Bearbeitungsschritt ausführende Arbeitsmaschine durch ein Assistenzsystem zur automatischen Teilbreitenschaltung angesteuert werden, welches eine Schaltung der Teilbreite in Abhängigkeit des zumindest einen empfangenen Arbeitsergebnisparameters bestimmt. Auf diese Weise lässt sich eine Bearbeitung von Teilflächen des Feldes vermeiden, welche bereits im vorangehenden Bearbeitungsschritt in der Weise bearbeitet wurden, dass sich dort kein zu bearbeitendes Erntegut mehr befindet.

Die eingangs gestellte Aufgabe wird weiterhin durch ein Routenplanungssystem mit den Merkmalen des nebengeordneten Anspruch 11 gelöst.

Gemäß dem Anspruch 11 wird ein Routenplanungssystem zur Erzeugung von Routenplänen für zumindest zwei unterschiedliche Bearbeitungsschritte ausführende landwirtschaftliche Arbeitsmaschinen, die zeitlich versetzt auf einem Feld den jeweiligen arbeitsmaschinenspezifischen Bearbeitungsschritt ausführen, vorgeschlagen, wobei die Ausführung des nachfolgenden Bearbeitungsschrittes von der Durchführung des vorangehenden Bearbeitungsschrittes abhängig ist, wobei das Routenplanungssystem zur Bestimmung des Routenplans zur Durchführung des vorangehenden Bearbeitungsschrittes in Abhängigkeit von der Arbeitsbreite der den vorangehenden Bearbeitungsschritt ausführenden Arbeitsmaschine ausgeführt und eingerichtet ist. Erfindungsgemäß ist vorgesehen, dass das Routenplanungssystem dazu ausgeführt und eingerichtet ist, die Routenplanung zur Durchführung der den nachfolgenden Bearbeitungsschritt ausführenden Arbeitsmaschine bei von der Arbeitsbreite der den vorangehenden Bearbeitungsschritt ausführenden Arbeitsmaschine abweichender Arbeitsbreite in Abhängigkeit von zumindest einem bestimmten Arbeitsergebnisparameter der Durchführung des vorangehenden Bearbeitungsschrittes durchzuführen.

Insbesondere kann das Routenplanungssystem dazu ausgeführt und eingerichtet sein, eine im vorangehenden Bearbeitungsschritt generierte Ablagebreite und/oder Ablageposition von Mähgut oder eines Schwads als zumindest einen Arbeitsergebnisparameter zu bestimmen.

Des Weiteren wird eine landwirtschaftliche Arbeitsmaschine mit den Merkmalen des Anspruches 13 vorgeschlagen. Die landwirtschaftliche Arbeitsmaschine gemäß Anspruch 13 ist zur Durchführung eines Bearbeitungsschrittes einer mehrere Teilprozesse aufweisenden Futterernteprozesskette ausgeführt und eingerichtet, wobei die Arbeitsmaschine ein Routenplanungssystem nach Anspruch 11 oder 12 umfasst, welches zur Durchführung des Verfahrens nach einem der Ansprüche 1 bis 10 ausgeführt und eingerichtet ist. Auf die weiter oben genannten Vorteile des erfindungsgemäßen Verfahrens sowie des Routenplanungssystems darf verwiesen werden.

Insbesondere kann die Arbeitsmaschine zur Durchführung eines als Mähen, Wenden oder Schwaden auszuführenden Bearbeitungsschrittes als Teilprozess der Futterernteprozesskette ausgeführt und eingerichtet sein.

Bevorzugt kann das Routenplanungssystem dazu ausgeführt und eingerichtet sein, die Routenplanung des Teilprozesses des Schwadens als nachfolgenden Bearbeitungsschrittes in Abhängigkeit von einer Ablagebreite von Mähgut im vorangehenden Bearbeitungsschritt des Teilprozesses Mähen oder Wenden durchzuführen.

Insbesondere kann die landwirtschaftliche Arbeitsmaschine als Traktor ausgeführt sein.

Die vorliegende Erfindung wird nachstehend anhand eines in den Zeichnungen dargestellten Ausführungsbeispieles näher erläutert.

Es zeigen:
- Fig. 1: schematisch und exemplarisch eine Ansicht von unterschiedliche Bearbeitungsschritte ausführenden Arbeitsmaschinen gemäß dem Stand der Technik;
- Fig. 2: schematisch und exemplarisch eine Ansicht von unterschiedliche Bearbeitungsschritte ausführenden Arbeitsmaschinen unter Verwendung von ISO-Section Control;
- Fig. 3: schematisch und exemplarisch eine Ansicht von unterschiedliche Bearbeitungsschritte ausführenden Arbeitsmaschinen gemäß einem erfindungsgemäß erzeugten Routenplan;
- Fig. 4: schematisch und exemplarisch eine Übersicht von unterschiedliche Bearbeitungsschritte ausführenden Arbeitsmaschinen; und
- Fig. 5: schematisch und exemplarisch eine Ansicht von unterschiedliche Bearbeitungsschritte ausführenden Arbeitsmaschinen unter Verwendung von ISO-Section Control gemäß einem erfindungsgemäß erzeugten Routenplan.

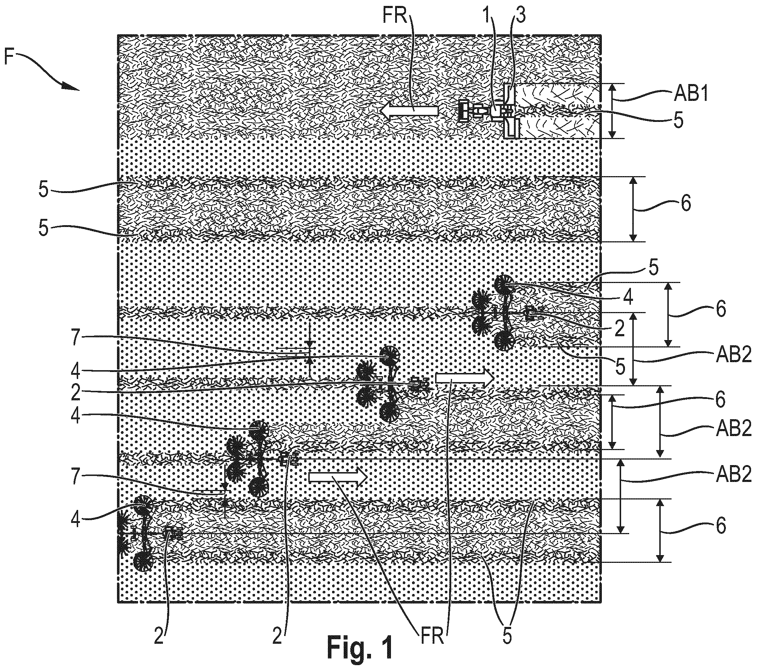

In Fig. 1 ist schematisch und exemplarisch eine Ansicht von unterschiedliche Bearbeitungsschritte ausführenden Arbeitsmaschinen dargestellt, welche entlang von Fahrspuren bewegt werden, die durch ein Routenplanungssystem unabhängig voneinander bestimmt werden.

Im Rahmen eines Futterernteprozesses werden einzelne Teilprozesse einer Futterernteprozesskette durch landwirtschaftliche Arbeitsmaschinen 1, 2 durchgeführt. Für zumindest zwei unterschiedliche Bearbeitungsschritte ausführende landwirtschaftliche Arbeitsmaschinen 1, 2, die zeitlich versetzt auf einem Feld F den jeweiligen arbeitsmaschinenspezifischen Bearbeitungsschritt ausführen, ist die Ausführung des nachfolgenden Bearbeitungsschrittes von der Durchführung des vorangehenden Bearbeitungsschrittes abhängig. Dies wird in Fig. 1 beispielhaft anhand der Teilprozesse Mähen und Schwaden veranschaulicht.

Bei den Arbeitsmaschinen 1, 2 handelt es sich um Traktoren, welche mit unterschiedlichen Anbaugeräten 3, 4 ausgestattet sind. Die Arbeitsmaschine 1 weist ein Mähwerk, insbesondere ein Bandmähwerk, als Anbaugerät 3 auf und führt als vorangehenden Bearbeitungsschritt das Mähen von Erntegut, beispielsweise Gras, auf dem Feld F aus. Die zumindest eine Arbeitsmaschine 2 weist einen Schwader als Anbaugerät 4 auf, das als nachfolgenden Bearbeitungsschritt das Schwaden des zuvor gemähten Erntegutes, nachfolgend als Mähgut bezeichnet, durchführt.

Das Anbaugerät 3 der Arbeitsmaschine 1 weist eine Arbeitsbreite AB1 auf, die geringer als die Arbeitsbreite AB2 des Anbaugerätes 4 der Arbeitsmaschine 2 sein kann. Das als Mähwerk ausgeführte Anbaugerät 3 der Arbeitsmaschine 1 weist drei Mäheinheiten auf, eine frontseitig angeordnete Mäheinheit und zwei seitlich angeordnete Mäheinheiten. Das Anbaugerät 3 ist im dargestellten Beispiel dazu eingerichtet, über die Arbeitsbreite AB1 gemähtes Erntegut anteilig auf einer Seite zu einem randseitigen Schwadabschnitt 5 zusammenzuführen. Bei einer Hin- und Herfahrt stellt sich somit eine Ablagebreite 6 des zu einem Schwadabschnitt 5 zusammengeführten Mähgutes ein, welche kleiner als die doppelte Arbeitsbreite AB1 des Anbaugerätes 3 ist.

Zum Zusammenführen des Mähgutes zu einem Schwad, welches von zumindest einer Erntemaschine 12 mit einer Aufnahmevorrichtung 13 aufgenommen werden kann, dessen Arbeitsbreite kleiner als die des Anbaugerätes 4 der Arbeitsmaschine 2 ist, kommt im nachfolgenden Bearbeitungsschritt die zumindest eine Arbeitsmaschine 2 mit als Schwader ausgeführtem Anbaugerät 4 zum Einsatz.

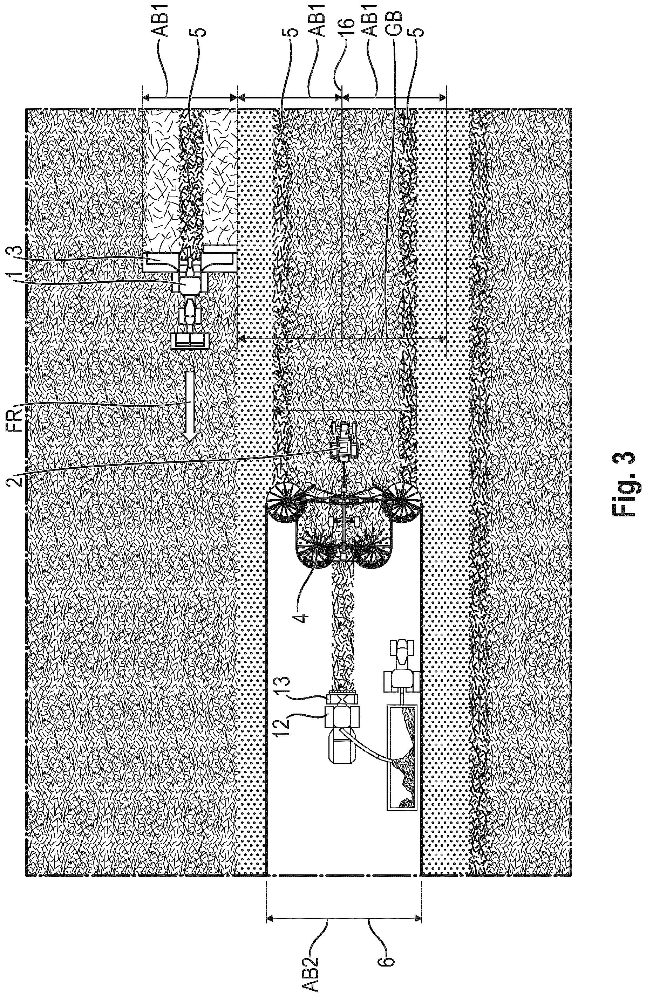

Die Erntemaschine 12 kann als selbstfahrender Feldhäcksler, als Ladewagen oder als Ballenpresse ausgeführt sein. Die Aufnahmevorrichtung 13 der Erntemaschine 12 kann beispielsweise als eine Pickup ausgeführt sein, wie in Fig. 3 beispielshaft dargestellt.

Im in Fig. 1 dargestellten Beispiel fahren eine oder mehrere Arbeitsmaschinen 2 versetzt hintereinander entlang parallel verlaufender Spurführungslinien 14, vorzugsweise in einer gemeinsamen Fahrtrichtung FR, über das Feld F. Den Abstand der abzufahrenden Spurführungslinien 14 durch die zumindest eine Arbeitsmaschine 2 zueinander bestimmt die Arbeitsbreite AB2 des Anbaugerätes 4. Die Spurführungslinien 14 werden statisch in Abhängigkeit der Arbeitsbreite AB2 des als Schwader ausgeführten Anbaugerätes 4 berechnet.

Die durch die Arbeitsmaschine 1 im vorangehenden Bearbeitungsschritt erzeugten seitlichen Schwadabschnitte 5 des Mähguts reduzieren die Ablagebreite 6 auf ein Maß, welches kleiner als die doppelte Arbeitsbreite AB1 des Anbaugerätes 3 ist. Die im nachfolgenden Bearbeitungsschritt eingesetzte zumindest eine Arbeitsfahrmaschine 2 berücksichtigen dies bei der Spurplanung durch ein Routenplanungssystem nicht, so dass von den Anbaugeräten 4 der Arbeitsmaschine 2 dazwischenliegende Bereiche 7 bearbeitet werden, die beim Mähen vom als Mähwerk ausgeführten Anbaugerät 3 der Arbeitsmaschine 1 bereits freigeräumt wurden. Der jeweilige Bereich 7 bezeichnet eine Teilfläche, die im vorangehenden Bearbeitungsschritt bereits entlang der Spurführungslinie der den vorangehenden Bearbeitungsschritt ausführenden Arbeitsmaschine 1 in der Weise bearbeitet wurde, dass sich dort kein Mähgut mehr befindet, und die von der den nachfolgenden Bearbeitungsschritt ausführenden Arbeitsmaschine 2 nicht mehr zu bearbeiten ist.

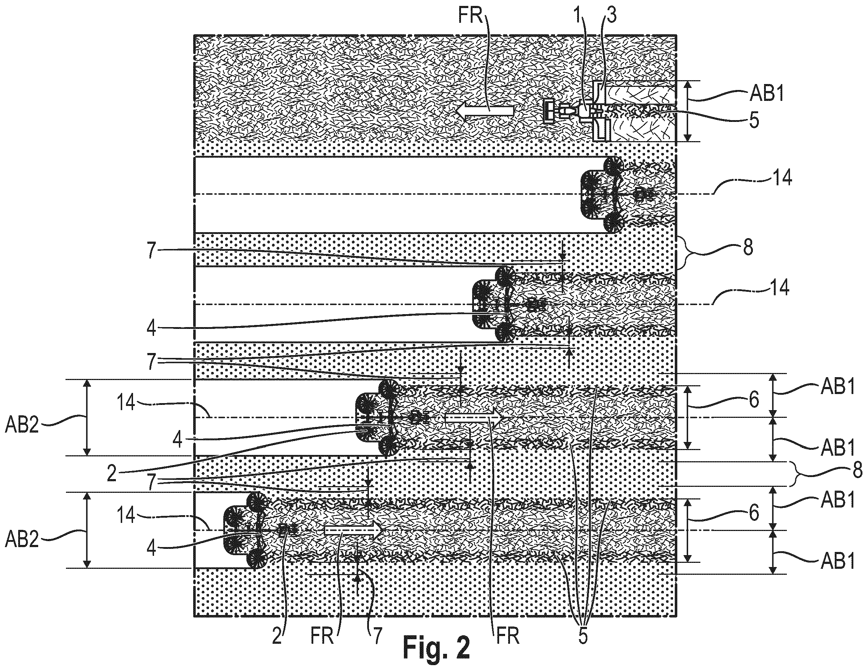

Die Darstellung in Fig. 2 zeigt eine Problemstellung, welche sich beim sogenannten ISO-Section Control unter den in Fig. 1 erläuterten Bedingungen für die Durchführung des vorangehenden Bearbeitungsschrittes Mähen durch die Arbeitsmaschine 1 ergibt. Bei der Durchführung des Bearbeitungsschrittes Mähen durch die Arbeitsmaschine 1 werden die Bereiche erfasst und dokumentiert, welche gemäht wurden. Diese Informationen werden an ein ISO-Bus-Terminal der Arbeitsmaschine 1 übermittelt. Das ISO-Bus-Terminal übermittelt diese Informationen mittelbar oder unmittelbar an Jobrechner der den nachfolgend nachfolgenden Bearbeitungsschritt ausführenden Arbeitsfahrmaschinen 2, um eine Teilbreitenschaltung (section control) der Anbaugeräten 4 anzusteuern. Diese Ansteuerung zur Teilbreitenschaltung ist in der in Fig. 2 dargestellten Situation nicht durchführbar, da zwischen den im vorangehenden Bearbeitungsschritt bearbeiteten Bereichen innerhalb der Arbeitsbreiten AB1 mit der Ablagebreite 6 Lücken 8 auftreten. Die Arbeitsmaschinen 2 bewegen sich im Abstand ihrer Arbeitsbreite AB2 zueinander entlang parallel verlaufender Spurführungslinien 14. Die Routenplanung für diese Spurführungslinien 14 beruht auf der übermittelten Arbeitsbreite AB1 der Arbeitsmaschine 1, so dass die Lücken 8 unberücksichtigt bleiben, was zur Doppelbearbeitung der Fläche führt.

Fig. 3 stellt schematisch und exemplarisch eine Ansicht von unterschiedliche Bearbeitungsschritte ausführenden Arbeitsmaschinen 1, 2 gemäß einem erfindungsgemäß erzeugten Routenplan dar. Veranschaulicht wird der Vorgang beispielhaft anhand einer Mähstrategie, die als "18 zu 12"-Mähverfahren bezeichnet ist. Das als Mähwerk ausgeführte Anbaugerät 3 weist als Arbeitsbreite AB1 hier und vorzugsweise eine Breite von 9 m auf. Entsprechend bearbeitet die Arbeitsmaschine 1 bei einer Hin- und Herfahrt eine Gesamtbreite GB von 18 m. Das seitliche Zusammenführen von gemähtem Erntegut durch eine der seitlichen Mäheinheiten, die jeweils die gleiche Bearbeitungsbreite aufweisen, hier 3 m, generiert die randseitigen Schwadabschnitte 5, welche die Ablagebreite 6 des vom Anbaugerät 3 generierten Mähgutes nach erfolgter Hin- und Herfahrt seitlich begrenzen. Die Ablagebreite 6 des Anbaugerätes 3 reduziert sich somit nach einer erfolgten Hin- und Herfahrt auf insgesamt 12 m, was im dargestellten Ausführungsbeispiel der Arbeitsbreite AB2 des Anbaugerätes 4 der Arbeitsmaschine 2 entspricht, welche den nachfolgenden Bearbeitungsschritt durchführt, hier das Schwaden.

Der Routenplan für die Arbeitsmaschine 1, die den vorangehenden Bearbeitungsschritt ausführt, basiert auf der Arbeitsbreite AB1 des Anbaugerätes 3. Die Bestimmung des Routenplans zur Durchführung des vorangehenden Bearbeitungsschrittes die Arbeitsmaschine 1 erfolgt dabei in Abhängigkeit von der Arbeitsbreite AB1 der den vorangehenden Bearbeitungsschritt ausführenden Arbeitsmaschine 1, um eine möglichst effiziente Bearbeitung des Feldes F zu erreichen.

Die Routenplanung zur Durchführung der den nachfolgenden Bearbeitungsschritt ausführenden Arbeitsmaschine 2 bei von der Arbeitsbreite AB1 der den vorangehenden Bearbeitungsschritt ausführenden Arbeitsmaschine 1 abweichender Arbeitsbreite AB2 wird in Abhängigkeit von zumindest einem bei der Durchführung des vorangehenden Bearbeitungsschrittes bestimmten Arbeitsergebnisparameter durchgeführt. Hier und vorzugsweise ist der zumindest eine bei der Durchführung des vorangehenden Bearbeitungsschrittes bestimmte Arbeitsergebnisparameter die Ablagebreite 6 und/oder Ablageposition des durch die Arbeitsmaschine 1 abgelegten Mähgutes entlang der im vorangehenden Bearbeitungsschritt abgefahrenen Fahrspur.

Die im vorangehenden Bearbeitungsschritt generierte Ablagebreite 6 und/oder Ablageposition des Mähguts als zumindest ein Arbeitsergebnisparameter wird bestimmt, indem das Arbeitsergebnis, die Ablagebreite 6 und/oder die Ablageposition des Mähgutes, aufgrund der Betriebsparameter, mit denen das Anbaugerät 3 betrieben wird, bekannt ist.

Der zumindest eine Arbeitsergebnisparameter kann von zumindest einer Sensoranordnung an der den vorangehenden Bearbeitungsschritt ausführenden Arbeitsmaschine 1 erfasst und/oder durch Auslesen eines in einer Speichereinrichtung der den vorangehenden Bearbeitungsschritt ausführenden Arbeitsmaschine 1 hinterlegten Sollwertes für den zumindest einen Arbeitsergebnisparameter bestimmt wird. Die Speichereinrichtung kann Bestandteil der Datenverarbeitungsvorrichtung 9 der den vorangehenden Bearbeitungsschritt ausführenden Arbeitsmaschine 1 sein. Die Speichereinrichtung kann auch Teil einer zusätzlichen Steuereinheit der Arbeitsmaschine 1 sein.

Alternativ oder zusätzlich kann zumindest eine Sensoranordnung an der den vorangehenden Bearbeitungsschritt ausführenden Arbeitsmaschine 1 vorgesehen sein, welche zur Bestimmung des zumindest einen Arbeitsergebnisparameters eingerichtet ist oder dazu eingerichtet ist, Daten zur Bestimmung des zumindest einen Arbeitsergebnisparameters beizustellen. Die zumindest eine Sensoranordnung kann wenigstens einen Positionsortungssensor und/oder einen optischen Sensor umfassen.

Mittels des wenigstens einen Positionsortungssensors werden Positionskoordinaten der den vorangehenden Bearbeitungsschritt ausführenden Arbeitsmaschine 1 erfasst, um die Fahrspur der den vorangehenden Bearbeitungsschritt ausführenden Arbeitsmaschine 1 aufzuzeichnen. Somit ist die Ablageposition des Mähgutes bekannt. Die Ablagebreite 6 resultiert aus der Arbeitsbreite AB1, die in Abhängigkeit von der Ausgestaltung des Anbaugerät 3 variieren kann, wie weiter oben bereits ausgeführt.

Ist die im vorangehenden Bearbeitungsschritt generierte Ablagebreite 6 kleiner als die Arbeitsbreite AB2 der den nachfolgenden Bearbeitungsschritt ausführenden Arbeitsmaschine 2, kann es vorgesehen sein, dass bei der Erstellung des Routenplans für die den nachfolgenden Bearbeitungsschritt ausführenden Arbeitsmaschine 2 eine angepasste Fahrspur 16 erzeugt wird, welche im Wesentlich in der Mitte der im vorangehenden Bearbeitungsschritt generierten Ablagebreite 6 verläuft. Hierzu wird zusätzlich die Ablageposition des im vorangehenden Bearbeitungsschritt generierten Mähgutes bestimmt.

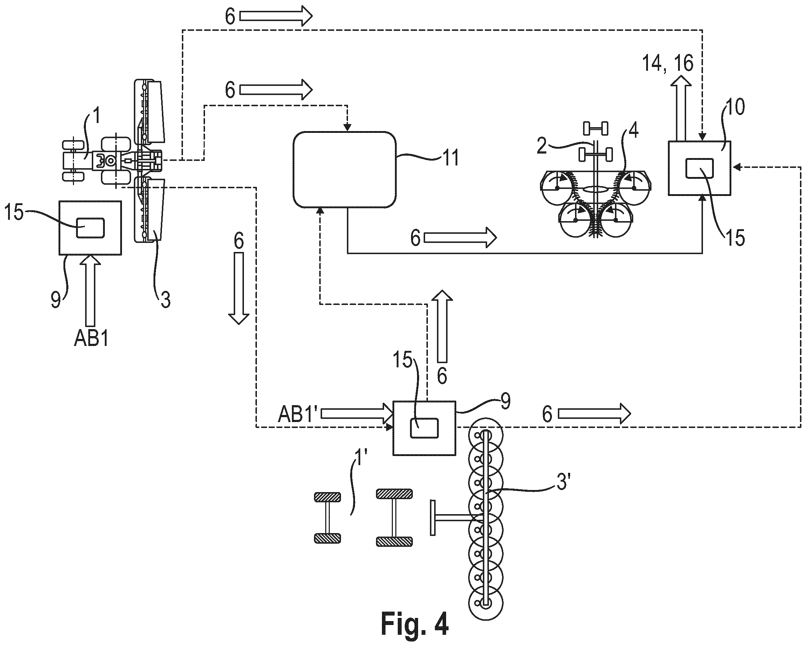

Hierfür ist vorgesehen, dass der zumindest eine bestimmte Arbeitsergebnisparameter von der den vorangehenden Bearbeitungsschritt ausführenden Arbeitsmaschine 1 von einer Datenverarbeitungseinrichtung 9 mittelbar oder unmittelbar an eine Datenverarbeitungseinrichtung 10 der den nachfolgenden Bearbeitungsschritt ausführenden Arbeitsmaschine 2 übertragen wird, wie in Fig. 4 dargestellt. Bei den Datenverarbeitungseinrichtungen 9 und 10 der Arbeitsmaschinen 1 bzw. 2 kann es sich beispielsweise um ISO-Bus-Terminals handeln.

Alternativ oder zusätzlich kann eine weitere entfernte Datenverarbeitungseinrichtung 11 vorgesehen sein, welche Daten von der den vorangehenden Bearbeitungsschritt ausführenden Arbeitsmaschine 1 empfängt und an die den nachfolgenden Bearbeitungsschritt ausführende Arbeitsmaschine 2 überträgt. Die entfernte Datenverarbeitungseinrichtung 11 kann insbesondere als Farmmanagementsystem ausgeführt sein.

Die Übertragung des zumindest einen Arbeitsergebnisparameters kann automatisch durch Datentransfer an oder manuell durch Eingabe in die Datenverarbeitungseinrichtung 10 der den nachfolgenden Bearbeitungsschritt ausführenden Arbeitsmaschine 2 durchgeführt werden. Eine automatische Übertragung des zumindest einen Arbeitsergebnisparameters findet bevorzugt dann statt, wenn der zeitliche Abstand zwischen der Durchführung des vorangehenden Bearbeitungsschrittes und des nachfolgenden Bearbeitungsschrittes so weit auseinanderliegt, dass die Arbeitsmaschine 1 beim Eintreffen der Arbeitsmaschine 2 das Feld F bereits verlassen hat. Ebenso kann die automatische Übertragung des zumindest einen Arbeitsergebnisparameters dann stattfinden, wenn die in Fig. 1 oder 2 dargestellte Betriebssituation besteht, in welcher die Arbeitsmaschine 1 und die zumindest eine Arbeitsmaschine 2 sich räumlich beabstandet, jedoch zeitgleich auf dem zu bearbeitenden Feld F befinden.

Bei der Erstellung des Routenplans für die den nachfolgenden Bearbeitungsschritt ausführenden Arbeitsmaschine 2 wird eine angepasste Fahrspur 16 erzeugt, welche im Wesentlich in der Mitte der im vorangehenden Bearbeitungsschritt generierten Ablagebreite 6 verläuft. Die angepasste Fahrtspur 16 wird von einem Routenplanungssystem 15 der Arbeitsmaschine 2 zur Routenplanung generiert. Somit kann im in Fig. 3 dargestellten Ausführungsbeispiel vermieden werden, dass von der Arbeitsmaschine 1 und deren Anbaugerät 3 bereits bearbeitete Teilflächen von der Arbeitsmaschine 2 und deren Anbaugerät 3 erneut bearbeitet werden. Dabei zeigt Fig. 3 einen Idealfall, bei welchem die im vorangehenden Bearbeitungsschritt generierte Ablagebreite 6 im Wesentlichen der Arbeitsbreite AB2 des Anbaugerätes 3 der Arbeitsmaschine 2 entspricht.

Die Darstellung in Fig. 4 zeigt schematisch und exemplarisch eine Übersicht von unterschiedliche Bearbeitungsschritte ausführenden Arbeitsmaschinen 1, 1'. Als vorangehender Bearbeitungsschritt kann, wie weiter oben bereits ausgeführt, ein Mähvorgang durch die Arbeitsmaschine 1 mit dem als Mähwerk ausgeführten Anbaugerät 3 durchgeführt werden. Als nachfolgender oder weiterer vorangehender Bearbeitungsschritt kann auch ein Wendevorgang durch die Arbeitsmaschine 1' mit dem als Heuwerbungsmaschine ausgeführten Anbaugerät 3' mit einer Arbeitsbreite AB1' durchgeführt werden. Der dem Wendevorgang nachfolgende Bearbeitungsschritt ist wiederum das Schwaden durch die Arbeitsmaschine 2 mit dem Anbaugerät 4.

Im Wendevorgang als vorangehender Bearbeitungsschritt kann das beim Mähen abgelegte Mähgut ebenfalls auf die Ablagebreite 6 zusammengeführt werden, die kleiner als die Arbeitsbreite AB1' des Anbaugerätes 3' sein kann. Hierfür stellt die Arbeitsmaschine 1 die Ablagebreite 6 als Arbeitsergebnisparameter der Datenverarbeitungsvorrichtung 9 der Arbeitsmaschine 1' zur Verfügung. Die Arbeitsmaschine 1' bestimmt auf Grundlage der von der Arbeitsmaschine 1 übermittelten Ablagebreite 6 als Arbeitsergebnisparameter mittels ihres Routenplanungssystems 15 den Routenplan mit den abzufahrenden Fahrspuren. Dabei kann die von der Arbeitsmaschine 1 an die Arbeitsmaschine 1' übermittelte Ablagebreite 6 der doppelten Arbeitsbreite AB1 oder einem hiervon abweichenden, größeren oder kleineren, Wert entsprechen.

Die sich einstellende Ablagebreite 6 als Arbeitsergebnisparameter bei der Durchführung des Wendevorgangs als vorangehender Bearbeitungsschritt durch die Arbeitsmaschine 1' wird von deren Datenverarbeitungsvorrichtung 10 an die entfernte Datenverarbeitungsvorrichtung 11 oder unmittelbar an die Datenverarbeitungsvorrichtung 10 der Arbeitsmaschine 2 übertragen, welche den nachfolgenden Bearbeitungsschritt ausführen soll.

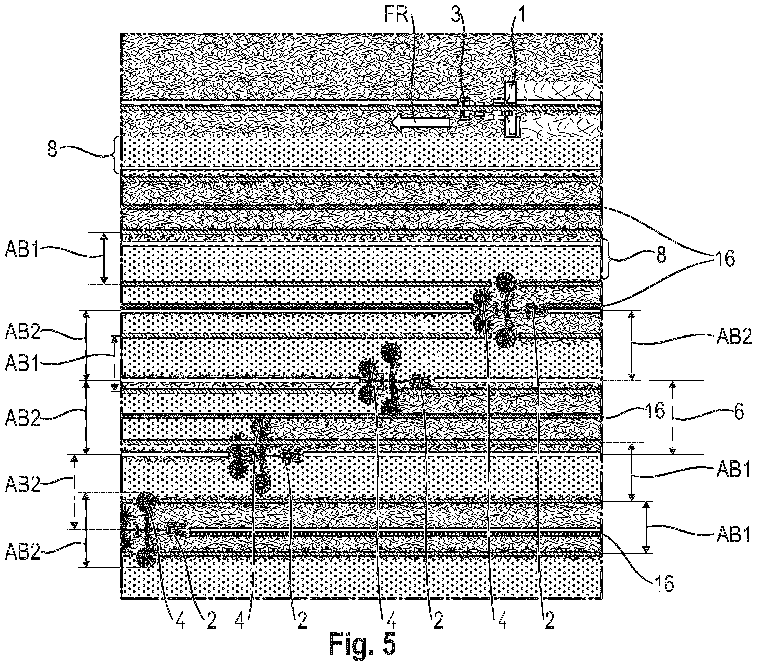

In Fig. 5 ist schematisch und exemplarisch eine Ansicht von unterschiedliche Bearbeitungsschritte ausführenden Arbeitsmaschinen 1, 2 unter Verwendung von ISO-Section Control gemäß einem erfindungsgemäß erzeugten Routenplan dargestellt.

Die auf Basis der Ablagebreite 6 als Arbeitsergebnisparameter generierten Routenpläne der zumindest einen Arbeitsmaschine 2, die das Feld F zeitlich versetzt zum vorangehenden Bearbeitungsschritt bearbeitet, sehen angepasste Fahrspuren 16 vor. Die angepassten Fahrspuren 16 verlaufen bezogen auf die Ablagebreite 6 mittig. Somit kann eine am unteren Feldrand dargestellte Arbeitsmaschine 2 ihre vollständige Arbeitsbreite AB2 nutzen, um den nachfolgenden Bearbeitungsschritt des Schwadens durchzuführen, indem sie entlang der mittig zur Ablagebreite 6 verlaufenden angepasst Fahrspuren 16 fährt.

Die in weiter oben befindlichen Positionen dargestellte zumindest eine Arbeitsmaschine 2 fährt im halben Abstand der Arbeitsbreite AB2 ihres Anbaugerätes 4 zur angepassten Fahrspur 16, die bezogen auf die Ablagebreite 6 mittig verläuft. Dies ermöglicht eine Teilbreitenabschaltung ihres Anbaugerätes 4, da ihr Anbaugerät 4 nur halbseitig den zwischen den beiden angepassten Fahrspuren 16 der zumindest einen Arbeitsmaschine 2 befindlichen Ablagebereich 6 bearbeiten muss.

Hierbei kann die den nachfolgenden Bearbeitungsschritt ausführende Arbeitsmaschine 2 durch ein Assistenzsystem zur automatischen Teilbreitenschaltung angesteuert werden, welches eine Schaltung der Teilbreite in Abhängigkeit des zumindest einen empfangenen Arbeitsergebnisparameters, der Ablagebreite 6 und/oder der Ablageposition, bestimmt.

Das Routenplanungssystem 15 ist zur Erzeugung von Routenplänen für zumindest zwei unterschiedliche Bearbeitungsschritte ausführende landwirtschaftliche Arbeitsmaschinen 1, 2, die zeitlich versetzt auf dem Feld F den jeweiligen arbeitsmaschinenspezifischen Bearbeitungsschritt ausführen, eingerichtet. Die Ausführung des nachfolgenden Bearbeitungsschrittes ist von der Durchführung des vorangehenden Bearbeitungsschrittes abhängig. Das Routenplanungssystem 15 ist zur Bestimmung des Routenplans zur Durchführung des vorangehenden Bearbeitungsschrittes in Abhängigkeit von der Arbeitsbreite AB1 der den vorangehenden Bearbeitungsschritt ausführenden Arbeitsmaschine 1 ausgeführt und eingerichtet. Das Routenplanungssystem 15 ist dazu ausgeführt und eingerichtet, die Routenplanung zur Durchführung der den nachfolgenden Bearbeitungsschritt ausführenden Arbeitsmaschine 2 bei von der Arbeitsbreite AB1 der den vorangehenden Bearbeitungsschritt ausführenden Arbeitsmaschine 1 abweichender Arbeitsbreite AB2 in Abhängigkeit von zumindest einem bestimmten Arbeitsergebnisparameter, der Ablagebreite 6 und /oder der Ablageposition, der Durchführung des vorangehenden Bearbeitungsschrittes durchzuführen. Dabei werden von dem zumindest einen bestimmten Arbeitsergebnisparameter angepasst Fahrspuren 16 generiert, entlang derer die zumindest eine Arbeitsmaschine 2, die den nachfolgenden Bearbeitungsschritt ausführt, geführt wird.

### Bezugszeichenliste

- 1: Arbeitsmaschine
- 1': Arbeitsmaschine
- 2: Arbeitsmaschine
- 3: Anbaugerät
- 3': Anbaugerät
- 4: Anbaugerät
- 5: Schwadabschnitt
- 6: Ablagebreite
- 7: Bereich
- 8: Lücke
- 9: Datenverarbeitungsvorrichtung
- 10: Datenverarbeitungsvorrichtung
- 11: Datenverarbeitungsvorrichtung
- 12: Erntemaschine
- 13: Aufnahmevorrichtung
- 14: Spurführungslinie
- 15: Routenplanungssystem
- 16: Fahrspur

- AB1: Arbeitsbreite
- AB1': Arbeitsbreite
- AB2: Arbeitsbreite
- F: Feld
- FR: Fahrtrichtung
- GB: Gesamtbreite

## Patentansprüche

1. Verfahren zur Erzeugung von Routenplänen für zumindest zwei unterschiedliche Bearbeitungsschritte ausführende landwirtschaftliche Arbeitsmaschinen (1, 1', 2), die zeitlich versetzt auf einem Feld (F) den jeweiligen arbeitsmaschinenspezifischen Bearbeitungsschritt ausführen, wobei die Ausführung des nachfolgenden Bearbeitungsschrittes von der Durchführung des vorangehenden Bearbeitungsschrittes abhängig ist, wobei der Routenplan zur Durchführung des vorangehenden Bearbeitungsschrittes in Abhängigkeit von einer Arbeitsbreite (AB1, AB1') der den vorangehenden Bearbeitungsschritt ausführenden Arbeitsmaschine(1, 1') bestimmt wird, **dadurch gekennzeichnet, dass** die Routenplanung zur Durchführung der den nachfolgenden Bearbeitungsschritt ausführenden Arbeitsmaschine (2) bei von der Arbeitsbreite (AB1, AB1') der den vorangehenden Bearbeitungsschritt ausführenden Arbeitsmaschine(1, 1') abweichender Arbeitsbreite (AB2) in Abhängigkeit von zumindest einem bestimmten Arbeitsergebnisparameter der Durchführung des vorangehenden Bearbeitungsschrittes durchgeführt wird.

2. Verfahren nach Anspruch 1, **dadurch gekennzeichnet, dass** der zumindest eine bestimmte Arbeitsergebnisparameter von der den vorangehenden Bearbeitungsschritt ausführenden Arbeitsmaschine (1, 1') von einer Datenverarbeitungseinrichtung (9, 11) mittelbar oder unmittelbar an eine Datenverarbeitungseinrichtung (10) der den nachfolgenden Bearbeitungsschritt ausführenden Arbeitsmaschine (2) übertragen wird.

3. Verfahren nach Anspruch 2, **dadurch gekennzeichnet, dass** die Übertragung des zumindest einen Arbeitsergebnisparameters automatisch durch Datentransfer an oder manuell durch Eingabe in die Datenverarbeitungseinrichtung (10) der den nachfolgenden Bearbeitungsschritt ausführenden Arbeitsmaschine (2) durchgeführt wird.

4. Verfahren nach Anspruch 1 bis 3, **dadurch gekennzeichnet, dass** eine im vorangehenden Bearbeitungsschritt generierte Ablagebreite (6) und/oder Ablageposition von Mähgut oder eines Schwads als zumindest ein Arbeitsergebnisparameter bestimmt wird.

5. Verfahren nach Anspruch 4, **dadurch gekennzeichnet, dass** die im vorangehenden Bearbeitungsschritt generierte Ablagebreite (6) größer oder kleiner als die Arbeitsbreite (AB2) der den nachfolgenden Bearbeitungsschritt ausführenden Arbeitsmaschine (2) ist.

6. Verfahren nach Anspruch 4 oder 5, **dadurch gekennzeichnet, dass** in Abhängigkeit von der Arbeitsbreite (AB2) der den nachfolgenden Bearbeitungsschritt ausführenden Arbeitsmaschine (2) zwei oder mehr Fahrspuren (16) erzeugt werden, durch welche die im vorangehenden Bearbeitungsschritt generierte Ablagebreite (6) gleichmäßig unterteilt wird.

7. Verfahren nach Anspruch 4 oder 5, **dadurch gekennzeichnet, dass** bei der Erstellung des Routenplans für die den nachfolgenden Bearbeitungsschritt ausführende Arbeitsmaschine (2) eine Fahrspur (16) erzeugt wird, welche im Wesentlich in der Mitte der im vorangehenden Bearbeitungsschritt generierten Ablagebreite (6) verläuft.

8. Verfahren nach einem der vorangehenden Ansprüche, **dadurch gekennzeichnet, dass** als vorangehender Bearbeitungsschritt ein Mähvorgang und/oder ein Wendevorgang von der den vorangehenden Bearbeitungsschritt ausführenden Arbeitsmaschine (1, 1') durchgeführt wird.

9. Verfahren nach einem der vorangehenden Ansprüche, **dadurch gekennzeichnet, dass** der zumindest eine Arbeitsergebnisparameter von zumindest einer Sensoranordnung an der den vorangehenden Bearbeitungsschritt ausführenden Arbeitsmaschine (1, 1') erfasst und/oder durch Auslesen eines in einer Speichereinrichtung der den vorangehenden Bearbeitungsschritt ausführenden Arbeitsmaschine (1, 1') hinterlegten Sollwertes für den zumindest einen Arbeitsergebnisparameter bestimmt wird.

10. Verfahren nach einem der vorangehenden Ansprüche, **dadurch gekennzeichnet, dass** die den nachfolgenden Bearbeitungsschritt ausführende Arbeitsmaschine (2) durch ein Routenplanungssystem (15) angesteuert wird, welches eine jeweilige Fahrspur (16) in Abhängigkeit des zumindest einen empfangenen Arbeitsergebnisparameters bestimmt.

11. Routenplanungssystem (15) zur Erzeugung von Routenplänen für zumindest zwei unterschiedliche Bearbeitungsschritte ausführende landwirtschaftliche Arbeitsmaschinen (1, 1', 2), die zeitlich versetzt auf einem Feld (F) den jeweiligen arbeitsmaschinenspezifischen Bearbeitungsschritt ausführen, wobei die Ausführung des nachfolgenden Bearbeitungsschrittes von der Durchführung des vorangehenden Bearbeitungsschrittes abhängig ist, wobei das Routenplanungssystem (15) zur Bestimmung des Routenplans zur Durchführung des vorangehenden Bearbeitungsschrittes in Abhängigkeit von einer Arbeitsbreite (AB1, AB1') der den vorangehenden Bearbeitungsschritt ausführenden Arbeitsmaschine (1, 1') ausgeführt und eingerichtet ist, **dadurch gekennzeichnet, dass** das Routenplanungssystem (15) dazu ausgeführt und eingerichtet ist, die Routenplanung zur Durchführung der den nachfolgenden Bearbeitungsschritt ausführenden Arbeitsmaschine (2) bei von der Arbeitsbreite (AB1, AB1') der den vorangehenden Bearbeitungsschritt ausführenden Arbeitsmaschine (1, 1') abweichender Arbeitsbreite (AB2) in Abhängigkeit von zumindest einem bestimmten Arbeitsergebnisparameter der Durchführung des vorangehenden Bearbeitungsschrittes durchzuführen.

12. Routenplanungssystem (15) nach Anspruch 11, **dadurch gekennzeichnet, dass** das Routenplanungssystem (15) dazu ausgeführt und eingerichtet ist, eine im vorangehenden Bearbeitungsschritt generierte Ablagebreite (6) und/oder Ablageposition von im vorangehenden Bearbeitungsschritt abgelegten Mähguts oder eines Schwads als zumindest einen Arbeitsergebnisparameter zu bestimmen.

13. Landwirtschaftliche Arbeitsmaschine (1, 1', 2), ausgeführt und eingerichtet zur Durchführung eines Bearbeitungsschrittes einer mehrere Teilprozesse aufweisenden Futterernteprozesskette, umfassend ein Routenplanungssystem (15) nach Anspruch 11 oder 12, wobei das Routenplanungssystem (15) zur Durchführung des Verfahrens nach einem der Ansprüche 1 bis 10 ausgeführt und eingerichtet ist.

14. Landwirtschaftliche Arbeitsmaschine (1, 1', 2) nach Anspruch 13, **dadurch gekennzeichnet, dass** die Arbeitsmaschine (1, 1', 2) zur Durchführung eines als Mähen, Wenden oder Schwaden auszuführenden Bearbeitungsschrittes als Teilprozess der Futterernteprozesskette ausgeführt und eingerichtet ist.

15. Landwirtschaftliche Arbeitsmaschine (1, 1', 2) nach Anspruch 14, **dadurch gekennzeichnet, dass** das Routenplanungssystem (15) dazu ausgeführt und eingerichtet ist, die Routenplanung des Bearbeitungsschrittes des Teilprozesses Schwadens in Abhängigkeit von einer Ablagebreite (6) und/oder Ablageposition von Mähgut im vorangehenden Bearbeitungsschritt des Teilprozesses Mähen oder Wenden durchzuführen.
